# EUROPÄISCHE PATENTSCHRIFT

(11) **EP 2 100 798 B1**
(45) Veröffentlichungstag und Bekanntmachung des Hinweises auf die Patenterteilung: **25.05.2011**
(21) Anmeldenummer: 09002496.9
(22) Anmeldetag: 21.02.2009
(51) Int. Cl.: B62D 15/02, B62D 5/04

(54) **Flurförderzeug, insbesondere Staplerfahrzeug**
Industrial truck, in particular forklift
Chariot de manutention, en particulier chariot élévateur

(30) Priorität: 12.03.2008 DE 102008013915
(43) Veröffentlichungstag der Anmeldung: 16.09.2009
(73) Patentinhaber: Jungheinrich Aktiengesellschaft, 22047 Hamburg (DE)
(72) Erfinder: Kramer, Dieter, 24558 Henstedt-Ulzburg (DE); Steiner, Michael, 22965 Todendorf (DE); Von Thienen, Nils, 22305 Hamburg (DE); Wiegandt, Jens, 01917 Kamenz (DE)
(74) Vertreter: Schildberg, Peter

(56) Entgegenhaltungen:
- DE-A1- 10 013 196
- DE-A1- 19 510 717
- DE-A1-102004 043 402
- DE-U1- 29 923 362
- US-A1- 2008 011 539

## Beschreibung

Die vorliegende Erfindung betrifft ein Flurförderzeug, insbesondere ein Staplerfahrzeug nach Anspruch 1.

Es ist bekannt, konventionelle Potenziometer zur Sensierung eines Fahrzeuglenkwinkels zu verwenden, indem das Potenziometer an zwei bei der Lenkung relativ zueinander bewegten Elementen angeordnet ist. Dabei ist die Widerstandsbahn des Potenziometers an einem der beiden Elemente fixiert und der Schleifer des Potenziometers ist mit dem anderen Element verbunden. Die Teilerspannung wird zwischen Schleifkontakt und Bezugspotenzial als Maß für die Relativpositionen der beiden beweglichen Elemente erfasst. Nachteilig bei derartigen Potenziometersensoren ist, dass Schleifer und Widerstandsbahn einerseits in Kontakt bleiben müssen und andererseits relativ zueinander beweglich gehalten werden müssen. Daraus ergibt sich neben der Abnutzung der Bauteile auch das Problem der Abdichtung. In feuchter oder schmutziger Umgebung können die elektrischen Eigenschaften des Potenziometers nachteilig beeinflusst werden, oder der Kontakt zwischen Schleifer und Widerstandsbahn kann unterbrochen werden.

Aus DE 299 23 362 U1 ist eine Positionsmesseinrichtung für ein Flurförderzeug bekannt, bei der ein magnetischer Positionsgeber an einem beweglichen Achsteil der Lenkachse angeordnet ist. An einem zweiten, nicht bewegten Achsteil ist eine Sensoranordnung in Form einer Gruppe beabstandeter Näherungsschaltelemente angeordnet, die derart in ein elektrisches Netzwerk einbezogen sind, dass sie eine Ausgangsspannung des Netzwerks in Abhängigkeit von der Position des Positionsgebers längs der Sensoranordnung steuern. Die sich ergebende Spannungs-Weg-Kennlinie weist diskrete Werte auf, d.h. das Messsystem verhält sich wie ein Stufenpotenziometer. Die Position des Positionsgebers wird in diskreten Schritten der Länge des Abstandes zwischen zwei Näherungsschaltelementen, also nur ungenau angegeben.

Die bekannten Positionsmesseinrichtungen erlauben mit nur einer Messung keine Fehlererkennung in der Messeinrichtung. Potenziometer verlangen einen physischen Kontakt der an den beweglichen Bauteilen der Lenkung angeordneten Elemente, die bekannte magnetische Positionsmessung liefert lediglich diskrete Messwerte. Mit ungenauen Messwerten sind auch ungenaue Vorgaben für ein elektrisches Differenzial verbunden, wodurch sich ein höherer Reifenverschleiß ergibt.

Aus DE 101 60 904 B4 ist ein Sensorsystem für die Positionsmessung an einem Hydraulikzylinder bekannt. Ein Magnet ist mit dem Kolben und ein magnetischer Sensor mit dem Zylinder verbunden.

Der Erfindung liegt die Aufgabe zugrunde, ein Flurförderzeug mit einer berührungslosen und analogen Positionsmesseinrichtung für die Lenkung zur Verfügung zu stellen, die eine einfache Funktionsprüfung ermöglicht.

Die Aufgabe wird durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug weist eine Antriebsachse mit Antriebsrädern und einen Antriebsmotor sowie eine Lenkachse mit zwei lenkbaren Rädern auf. Die lenkbaren Räder werden über eine z.B. elektrohydraulische Lenkvorrichtung an einer Spurstange der Lenkachse so bewegt, dass das Fahrzeug eine entsprechende Lenkbewegung durchführen kann. Die Lenkvorrichtung wird von einem Lenkmotor angetrieben, der von einer Lenksteuerung angesteuert wird. Ein Sollwertsensor ist mit einem Lenkrad verbunden und nimmt den Soll-Lenkwinkel des Fahrzeugs auf und gibt ihn an die Lenksteuerung weiter. Ferner erhält die Lenksteuerung Signale von einem an der Lenkachse angeordneten Istwertsensor, der die Ist-Position der Räder über die Sensierung der Position der Spurstange aufnimmt. Aus den Ist-Werten errechnet die Lenksteuerung einen Fahrzeuglenkwinkel. Durch einen Vergleich der Soll- und Ist-Werte wird der Lenkmotor so angesteuert, dass der berechnete Fahrzeuglenkwinkel dem Soll-Lenkwinkel entspricht.

Der Istwertsensor weist einen Positionsgebermagnet auf, dessen Position von zwei magnetischen Resonanzsensoren erfasst wird. Bei einer Lenkbewegung der Lenkstange werden die Resonanzsensoren und der Positionsgebermagnet relativ zueinander bewegt, indem ein Element an der Spurstange, und das andere Element fest am Fahrzeug angeordnet ist. Durch die gegenläufige Anordnung der Sensoren werden bei der Bewegung des Positionsgebermagneten gegenläufige Signale erzeugt, d.h. der Positionsgebermagnet bewegt sich auf das eine Ende des einen Resonanzsensors zu und gleichzeitig von dem entsprechenden Ende des anderen Resonanzsensors weg. Mit der Bewegung werden zwei kontinuierliche, gegenläufige Signale erzeugt, die unabhängig zur Berechnung des Fahrzeuglenkwinkels herangezogen werden können. Für jedes einzelne Signal muss sich der gleiche Wert für den Fahrzeuglenkwinkel ergeben, wodurch eine Fehlfunktion des Istwertsensors festgestellt werden kann. Dabei müssen die beiden Signale der Sensoren addiert oder subtrahiert stets einen konstanten Wert ergeben. Ist das nicht der Fall, liegt eine Störung vor. Dies ermöglicht eine Überwachung der Lenksteuerung. Die elektronischen Komponenten, insbesondere die Sensoren sind in schützenden Gehäusen untergebracht, um auch in feuchter oder schmutziger Umgebung zuverlässig zu funktionieren. Da die Sensorik berührungslos arbeitet, ist dies einfach zu gewährleisten.

In einer bevorzugten Ausgestaltung sind die magnetischen Resonanzsensoren fest am Fahrzeug angeordnet, und der Positionsgebermagnet ist bei einer Lenkbewegung mitbewegt fest an der Spurstange angeordnet.

Bevorzugt sind die magnetischen Resonanzsensoren fest am Fahrzeug angeordnet, und der Positionsgebermagnet ist an einer Parallelstange angebracht, die parallel an der Spurstange angebracht ist. Hierdurch kann die Istwertsensorik unabhängig von konstruktiven Vorgaben der Lenkvorrichtung angeordnet werden.

In einer bevorzugten Ausgestaltung gibt die Lenksteuerung bei einer erkannten Fehlfunktion in der Istwertsensorik ein Stopp-Signal ab. Dadurch wird das Fahrzeug bei einem Fehler in der Lenksensorik angehalten, um mögliche Unfälle zu vermeiden.

In einer bevorzugten Ausgestaltung errechnet die Lenksteuerung oder ein anderes Steuerteil aus dem Fahrzeuglenkwinkel eine Maximal-Fahrgeschwindigkeit und steuert den Antriebsmotor entsprechend an. Auf diese Weise wird sichergestellt, dass das Fahrzeug bei einer Kurvenfahrt nicht kippt. Die Maximal-Fahrgeschwindigkeit ergibt sich aus dem Fahrzeug selbst, dem Kurvenradius und der Ladung.

Bevorzugt ist jedem Antriebsrad je ein Antriebsmotor zugeordnet.

In einer bevorzugten Ausgestaltung errechnet die Lenksteuerung oder ein anderes Steuerteil aus dem Fahrzeuglenkwinkel dem Kurvenradius der Antriebsräder entsprechende Drehzahlen. Die Antriebsmotoren, die je ein Rad antreiben, werden mit der Drehzahl angesteuert, die für das jeweilige Antriebsrad für die eingeschlagene Kurve notwendig ist, um das Fahrzeug mit rollenden Antriebsrädern anzutreiben. Durch ein solches Differenzial wird der Schlupf der Antriebsräder aneinander angeglichen und ein erhöhter Reifenverschleiß vermieden.

Vorzugsweise ist die Antriebsachse die Vorderachse und die Lenkachse die Hinterachse.

Eine bevorzugte Ausgestaltung des Flurförderzeugs mit zweikanaliger Istwert-Sensorik wird anhand einer Figur nachfolgend näher erläutert.

Das in stark schematisierter Darstellung gezeigte erfindungsgemäße Achssystem mit Steuerelementen und Sensorik weist eine Antriebsachse 1 und eine Steuerachse 2 auf. An der Antriebsachse 1 mit Antriebsrädern 66 ist jedem Antriebsrad 66 ein jeweiliger Antriebsmotor 60 zugeordnet. Die Steuerachse 2, die vorzugsweise die Hinterachse ist, weist eine Spurstange 42 mit an ihr lenkbar befestigten Rädern 46 sowie eine parallel zur Spurstange 42 angebrachte Parallelstange 43 auf.

An der Parallelstange 43 ist ein Positionsgebermagnet 44 angebracht, der bei einer Lenkbewegung berührungslos relativ zu zwei magnetischen Resonanzsensoren 50, 52, die fest am Fahrzeug in einem wasserdichten Gehäuse angeordnet sind, bewegt wird. Die Resonanzsensoren 50, 52 erzeugen in Abhängigkeit von der Position des Positionsgebermagneten 44 analoge Signale und sind so angeordnet, dass die Signale gegenläufig sind. Die Signale der beiden magnetischen Resonanzsensoren 50, 52 werden in einer angeschlossenen Lenksteuerung 20 registriert. Eines der beiden Signale dient als Ist-Lenkwinkel für eine Lenkregelung (nicht gezeigt).

Die Lenksteuerung 20 ist außerdem mit einem Sollwertsensor 10 verbunden, der an einem Lenkgeber 11 angeschlossen ist und einen Soll-Lenkwinkel misst. Die von dem Sollwertsensor 10 erhaltenen Signale und die Ist-Signale eines Kanals laufen in der Lenksteuerung 20 zusammen und werden dort verarbeitet. Die Lenksteuerung 20 steht mit einem Lenkmotor 30 in Verbindung, der die von der Lenksteuerung 20 erhaltenen Stellsignale mit einer Aktorik über eine Lenkvorrichtung 40 umsetzt. Die Lenkvorrichtung verschiebt mechanisch (z.B. über eine Hydraulik) die Spurstange 42 wodurch der Fahrzeuglenkwinkel nach Maßgabe des Soll-Lenkwinkels eingestellt wird.

Durch Berücksichtigung der Ist-Lenkwinkels der Räder 46 kann die Lenksteuerung 20 die Antriebsmotoren 60 jeweils so ansteuern, dass jeder Motor 60 die Drehzahl erhält, die er braucht, damit das Fahrzeug dem Kurvenradius entsprechend mit rollenden Rädern, d.h. mit annähernd gleichem Schlupf für beide Räder um die Kurve fährt. Außerdem kann eine dem Kurvenradius entsprechende Höchstgeschwindigkeit vorgegeben werden.

Die Resonanzsensoren 50, 52 können ausgedehnt und antiparallel zueinander ausgerichtet sein und voneinander unabhängig den Ort des Positionsgebermagneten 44 messen, oder sie können einander gegenüberliegend so angeordnet sein, dass sie die Position des Positionsgebermagneten 44 über den Abstand zu ihnen messen, wobei der Positionsgebermagnet 44 zwischen den Resonanzsensoren 50, 52 beweglich angeordnet ist und die Summe der beiden gemessenen Abstände konstant ist.

Beide Ist-Signale müssen mit ihrem absoluten Wert bei korrekter Erfassung des Lenkwinkels addiert oder subtrahiert einen vorgegebenen Wert ergeben. Ist dies nicht der Fall, kann daraus auf einen Fehler geschlossen werden. Dieser wird angezeigt und/oder führt zu einem Stopp des Fahrzeugs.

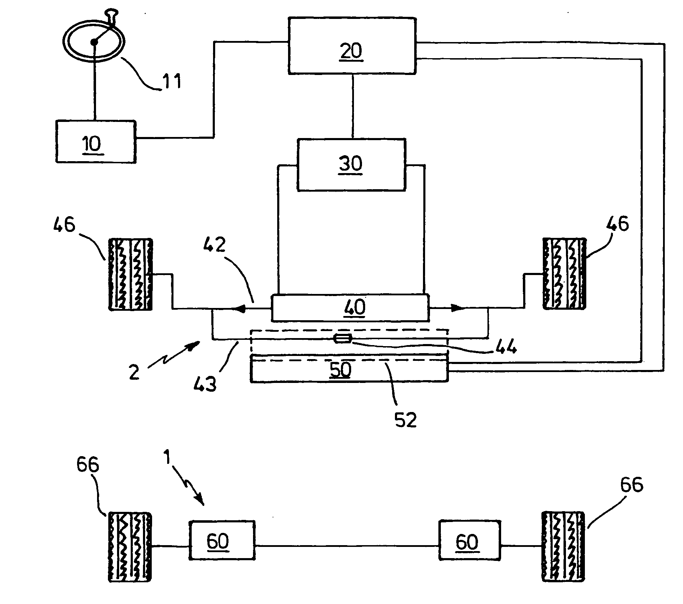

## Patentansprüche

1. Flurförderzeug, insbesondere Staplerfahrzeug, mit
• einer Antriebsachse (1) mit Antriebsrädern (66) und einem Antriebmotor (60),
• einer Lenkachse (2) mit zwei lenkbaren Rädern (46),
• einem Sollwertsensor (10), der mit einem Lenkrad (11) verbunden ist,
• einem Lenkmotor (30),
• einer Lenkvorrichtung (40), die mit einer Spurstange (42) in Wirkverbindung steht,
• einem Positionsgebermagnet (44), dessen Position von zwei magnetischen Resonanzsensoren (50, 52) erfasst wird, wobei Positionsgebermagnet (44) und Resonanzsensoren (50, 52) bei Lenkbewegung der Lenkvorrichtung (40) relativ zueinander bewegt werden und die magnetischen Resonanzsensoren (50, 52) gegenläufige analoge Ist-Signale für den Lenkwinkel der lenkbaren Räder erzeugen,
• einer mit dem Sollwertsensor (10), dem Lenkmotor (30) und den magnetischen Resonanzsensoren (50, 52) verbundenen Lenksteuerung (20), die von dem Sollwertsensor (10) und den magnetischen Resonanzsensoren (50, 52) erhaltene Signale auswertet und den Fahrzeuglenkwinkel auf den Soll-Lenkwinkel regelt, wobei die Signale der magnetischen Resonanzsensoren (50, 52) von der Lenksteuerung (20) zur Erkennung einer Fehlfunktion einer der magnetischen Resonanzsensoren (50, 52) ausgewertet werden.

2. Flurförderzeug nach Anspruch 1, **dadurch gekennzeichnet, dass** die magnetischen Resonanzsensoren (50, 52) fahrzeugfest sind und der Positionsgebermagnet (44) an der Spurstange (42) angebracht ist.

3. Flurförderzeug nach Anspruch 1, **dadurch gekennzeichnet, dass** die magnetischen Resonanzsensoren (50, 52) fahrzeugfest sind und der Positionsgebermagnet (44) an einer Parallelstange (43) angebracht ist, die parallel an der Spurstange (42) angebracht ist.

4. Flurförderzeug nach einem der Ansprüche 1 bis 3, **dadurch gekennzeichnet, dass** die Lenksteuerung (20) bei erkannter Fehlfunktion ein Stopp-Signal abgibt.

5. Flurförderzeug nach einem der Ansprüche 1 bis 4, **dadurch gekennzeichnet, dass** die Lenksteuerung (20) oder ein anderes Steuerteil aus dem Fahrzeuglenkwinkel eine der Lenkstellung entsprechende Maximal-Fahrgeschwindigkeit errechnet und den Antriebsmotor (60) entsprechend ansteuert.

6. Flurförderzeug nach einem der Ansprüche 1 bis 5, **dadurch gekennzeichnet, dass** den Antriebsrädern (66) je ein Antriebmotor (60) zugeordnet ist.

7. Flurförderzeug nach Anspruch 6, **dadurch gekennzeichnet, dass** die Lenksteuerung (20) oder ein anderes Steuerteil aus dem Fahrzeuglenkwinkel dem Kurvenradius der Antriebsräder (66) entsprechende Drehzahlen errechnet und die Antriebsmotoren (60) mit der Drehzahl ansteuert, die für das jeweilige Antriebsrad (66) notwendig ist, um den Schlupf der Antriebsräder (66) aneinander anzugleichen.

8. Flurförderzeug nach einem der Ansprüche 1 bis 7, **dadurch gekennzeichnet, dass** die Antriebsachse (1) die Vorderachse und die Lenkachse (2) die Hinterachse ist.

## Claims

1. An industrial truck, in particular a lift truck, comprising
• a drive axle (1) comprising drive wheels (66) and a drive motor (60),
• a steering axle (2) comprising two steerable wheels (46),
• a target value sensor (10) connected to a steering wheel (11),
• a steering motor (30),
• a steering device (40) in effective connection with a steering tie rod (42),
• a position transducer magnet (44) whose position is recorded by two magnetic resonance sensors (50, 52), wherein the position transducer magnet (44) and the resonance sensors (50, 52) are moved relative to each other during a steering movement of the steering device (40), and wherein the magnetic resonance sensors (50, 52) generate counter directional analog actual signals the steering angle of the steerable wheels,
• a steering control (20), connected to the target value sensor (10), the steering motor (30), and the magnetic resonance sensors (50, 52), which evaluates the signals received from the target value sensor (10) and the magnetic resonance sensors (50, 52), and controls the vehicle steering angle to be the target steering angle, wherein the signals of the magnetic resonance sensors (50, 52) are evaluated by the steering control (20) in order to recognize a malfunction of one of the magnetic resonance sensors (50, 52).

2. The industrial truck according to claim 1, **characterized in that** the magnetic resonance sensors (50, 52) are fixed to the vehicle, and the position transducer magnet (44) is mounted to the steering tie rod (42).

3. The industrial truck according to claim 1, **characterized in that** the magnetic resonance sensors (50, 52) are fixed to the vehicle, and the position transducer magnet (44) is mounted to parallel rod (43) which is arranged in parallel to the steering tie rod (42).

4. The industrial truck according to one of the claims 1 to 3, **characterized in that** the steering control (20) issues a stop signal if a malfunction is recognized.

5. The industrial truck according to one of the claims 1 to 4, **characterized in that** the steering control (20), or another control device, calculates from the vehicle steering angle a maximum driving speed corresponding to the steering position, and controls the drive motor (60) accordingly.

6. The industrial truck according to one of the claims 1 to 5, **characterized in that** to each of the drive wheels (66) a drive motor (60) is assigned.

7. The industrial truck according to claim 6, **characterized in that** the steering control (20), or another control device, calculates from the vehicle steering angle rotational speeds corresponding to the curve radius of the drive wheels (66), and controls the drive motors (60) with the rotational speed which is necessary for the respective drive wheel (66) to adapt sliping of the drive wheels (66) to each other.

8. The industrial truck according to one of the claims 1 to 7, **characterized in that** the drive axle (1) is the front axle, and the steering axle (2) beint the rear axle.

## Revendications

1. Chariot de manutention, en particulier chariot élévateur, avec
• un essieu moteur (1) avec des roues motrices (66) et un moteur d'entraînement (60),
• un essieu directeur (2) avec deux roues directrices (46),
• un capteur de valeur de consigne (10) qui est raccordé à un volant de direction (11),
• un moteur de direction (30)
• un dispositif de direction (40) qui est en relation opératoire avec une barre de connexion (42),
• un aimant indicateur de position (44) dont la position est détectée par deux capteurs à résonance magnétique (50, 52), l'aimant indicateur de position (44) et les capteurs à résonance (50, 52) étant déplacés les uns par rapport aux autres lors du mouvement de braquage du dispositif de direction (40), et les capteurs à résonance magnétique (50, 52) produisant des signaux effectifs analogiques opposés pour l'angle de braquage des roues directrices,
• une commande de direction (20) raccordée au capteur de valeur de consigne (10), au moteur de direction (30) et aux capteurs à résonance magnétique (50, 52) et qui analyse les signaux fournis par le capteur de valeur de consigne (10) et par les capteurs à résonance magnétique (50, 52) et qui règle l'angle de braquage du véhicule sur l'angle de braquage de consigne, les signaux des capteurs à résonance magnétique (50, 52) étant analysés par la commande de direction (20) pour la détection d'un dysfonctionnement de l'un des capteurs à résonance magnétique (50, 52).

2. Chariot de manutention selon la revendication 1, **caractérisé en ce que** les capteurs à résonance magnétique (50, 52) sont fixes par rapport au véhicule et **en ce que** l'aimant indicateur de position (44) est mis en place sur la barre de connexion (42).

3. Chariot de manutention selon la revendication 1, **caractérisé en ce que** les capteurs à résonance magnétique (50, 52) sont fixes par rapport au véhicule et **en ce que** l'aimant indicateur de position (44) est mis en place sur une barre parallèle (43) qui est mise en place parallèlement sur la barre de connexion (42).

4. Chariot de manutention selon une des revendications 1 à 3, **caractérisé en ce que** la commande de direction (20) délivre un signal d'arrêt en cas de détection d'un dysfonctionnement.

5. Chariot de manutention selon une des revendications 1 à 4, **caractérisé en ce que** la commande de direction (20) ou une autre partie de commande calcule, à partir de l'angle de braquage du véhicule, une vitesse de marche maximale correspondant à la position de braquage et pilote en conséquence le moteur d'entraînement (60).

6. Chariot de manutention selon une des revendications 1 à 5, **caractérisé en ce qu'**un moteur d'entraînement (60) est respectivement affecté aux roues motrices (66).

7. Chariot de manutention selon la revendication 6, **caractérisé en ce que** la commande de direction (20) ou une autre partie de commande calcule, à partir de l'angle de braquage du véhicule, des vitesses de rotation correspondant au rayon de courbure des roues motrices (66) et pilote les moteurs d'entraînement (60) avec la vitesse de rotation qui est nécessaire pour la roue motrice (66) respective pour compenser le patinage des roues motrices (66) l'une par rapport à l'autre.

8. Chariot de manutention selon une des revendications 1 à 7, **caractérisé en ce que** l'essieu moteur (1) est l'essieu avant et l'essieu directeur (2) est l'essieu arrière.
